# EUROPÄISCHE PATENTSCHRIFT

(11) **EP 0 718 168 B1**
(45) Veröffentlichungstag und Bekanntmachung des Hinweises auf die Patenterteilung: **01.09.1999**
(21) Anmeldenummer: 95119677.3
(22) Anmeldetag: 14.12.1995
(51) Int. Cl.: B60T 17/08, F16D 65/28

(54) **Bremszylinder für eine druckluftbetätigte Fahrzeugbremse**
Brake cylinder for a pneumatically actuated vehicle brake
Cylindre de frein pour un frein de véhicule à actionnement pneumatique

(30) Priorität: 22.12.1994 DE 4445960
(43) Veröffentlichungstag der Anmeldung: 26.06.1996
(73) Patentinhaber: Haldex Brake Products GmbH & Co. KG, 69123 Heidelberg (DE)
(72) Erfinder: Blanz, Roland, D-69253 Heiligkreuzsteinach (DE)
(74) Vertreter: Patentanwälte Rehberg + Hüppe

(56) Entgegenhaltungen:
- EP-A- 0 452 621
- DE-A- 3 411 054
- DE-A- 4 345 262
- FR-A- 2 203 731
- FR-A- 2 491 416

## Beschreibung

Die Erfindung betrifft einen Bremszylinder für eine druckluftbetätigte Fahrzeugbremse mit den im Oberbegriff des Anspruches 1 genannten Merkmalen. Bremszylinder dieser Art werden auch häufig als Federspeicherbremszylinder oder als kombinierte Bremszylinder bezeichnet. Sie dienen der Erreichung einer Betriebsbremsfunktion, wobei als steuerndes Element ein Betriebsbremsventil eingesetzt wird. Zur Erfüllung einer Hilfs- und/oder Feststellbremsfunktion dient in der Regel ein Handbremsventil.

Ein Bremszylinder der eingangs beschriebenen Art ist aus der EP 0 074 734 A2 bekannt. Dabei ist eine mechanische Verriegelungseinrichtung zwischen die Kolbenstange des Betriebsbremsteils und dem Gehäuse des Bremszylinders eingeschaltet, mit deren Hilfe der Rückwärtshub des Kolbens des Betriebsbremsteils beschränkt wird. Obwohl baulich gesehen der Kolben des Betriebsbremsteiles einen relativ großen Hub überstreichen kann, der auch bei der allerersten Bremsbetätigung teilweise genutzt werden kann, erbringt die Verriegelungseinrichtung während normaler Betriebsbremsungen die Wirkung, daß der Vorwärtshub und der Rückwärtshub des Kolbens des Betriebsbremsteiles sehr klein gehalten werden, entsprechend der Teilung der Verzahnung der Verriegelungseinrichtung, wobei der Hub des Speicherkolbens auch relativ klein gewählt werden kann. Dieser Hub des Speicherkolbens bei Hilfs- und/oder Feststellbremsungen muß aber immer größer sein als die Teilung der Verriegelungseinrichtung, damit über den Speicherkolben ggfs. ein Überhub gegenüber dem effektiven Hub des Kolbens des Betriebsbremsteils möglich ist und auf diese Art und Weise Wegänderungen in der Bremse aufgrund von Temperaturänderungen begegnet werden kann. Die Verriegelungseinrichtung macht also den nutzbaren Hub des Betriebsbremsteils kleiner als den nutzbaren Hub des Hilfs- und/oder Feststellbremsteils. Dies ist im Sinne des Erreichens bzw. Zulassen eines Überhubes sinnvoll, jedoch insofern nachteilig, als dadurch auch der Rückhub des Kolbens des Betriebsbremsteiles vergleichsweise klein wird. Es besteht die Gefahr, daß der durch die Verriegelungseinrichtung bereitgestellte Rückhub des Kolbens des Betriebsbremsteils sehr klein wird oder sogar zu 0 wird, nämlich immer dann, wenn der fortschreitende Bremsbelagverschleiß gerade ein Überspringen eines Zahnes der Verriegelungseinrichtung möglich macht. Zieht man dann noch Wegänderungen in der Radbremse infolge Temperaturänderungen in Betracht, dann läßt sich in solchen Situationen die Betriebsbremse nicht mehr lösen. Diese Gefahrensituation wird jedoch durch ungewollten Verschleiß der Bremsbeläge während der Fahrt und ohne Betätigung der Betriebsbremse wieder beseitigt.

Weitere Bremszylinder sind aus der DE 39 35 663 A1, dem DE-GM 66 04 967 oder auch aus der EP 0 457 030 B1 bekannt. Dabei ist in einem gemeinsamen Gehäuse ein Betriebsbremsteil einerseits und ein Hilfs- und/oder Feststellbremsteil andererseits angeordnet, die durch eine gehäusefeste Trennwand voneinander getrennt sind. Die Einheit aus Kolben und Kolbenstange des Betriebsbremsteils ist mit ihrer Kolbenstange aus dem Gehäuse herausgeführt und mit der Radbremse verbunden, die als Scheibenbremse oder als Trommelbremse ausgebildet sein kann. Die Einheit aus Speicherkolben und Speicherkolbenstange ist gleichsinnig wie die entsprechende Einheit des Betriebsbremsteiles angeordnet. Die Speicherkolbenstange ist dichtend durch die Trennwand hindurchgeführt, die ansonsten die Bremskammer des Betriebsbremsteils von der Lösekammer des Hilfs- und/oder Feststellbremsteils trennt. Der Hub der Einheit aus Speicherkolben und Speicherkolbenstange ist mindestens so groß wie der Hub der Einheit aus Kolben und Kolbenstange. Aus Sicherheitsgründen kann die Speicherkolbenstange auch einen Überhub aufweisen. Bedingt durch diesen doppelten Hub baut ein solcher Bremszylinder relativ lang. Er weist ein beträchtliches Gewicht auf und erfordert am Fahrzeug die Bereitstellung des entsprechenden Platzes. Oft erfolgt die Befestigung des Bremszylinders am Fahrzeug im Bereich der Stirnwand des Gehäuses, durch die die Kolbenstange nach außen geführt ist. Die relativ große Länge des Bremszylinders in Verbindung mit der Masse der Speicherfeder, des Speicherkolbens und der Speicherkolbenstange wirkt sich insoweit nachteilig aus.

Aus der EP 0 377 898 B1 ist ein einstufiger Bremszylinder mit Kolben und Kolbenstange bekannt, dem eine Verriegelungseinrichtung in Form einer Klemmvorrichtung zugeordnet ist. Die Verriegelungseinrichtung ist zwischen dem Gehäuse des Bremszylinders und der Kolbenstange eingeschaltet. Damit ist es möglich, nach einer Betätigung der Einheit aus Kolben und Kolbenstange die Kolbenstange zu verriegeln, also in der erreichten Stellung festzuhalten. Die mechanische Verriegelungseinrichtung ist hydraulisch betätigbar, d. h. lösbar. Wenn dieser bekannte Zylinder zur Erfüllung einer Betriebsbremsfunktion eingesetzt wird, ist es vorteilhaft möglich, nach Ausführung des Hubes der Betriebsbremse die Verriegelungseinrichtung zur Einwirkung zu bringen, um insoweit den Bremsvorgang fortzusetzen, bis die Verriegelungseinrichtung wieder gelöst wird. In Verbindung mit insbesondere Scheibenbremsen läßt sich ein solcher einstufiger Zylinder mit Verriegelungseinrichtung nur bedingt einsetzen. Wenn eine Feststellbremsfunktion erreicht werden soll, ist es zwar möglich, die Einheit aus Kolben und Kolbenstange zu betätigen und sodann über die Verriegelungseinrichtung festzuklemmen. Ein Abkühlen der Bremsscheiben würde jedoch einen Nachstellhub erfordern, der bei dem bekannten einstufigen Zylinder nicht aufgebracht werden kann. Wird dieser Nachstellhub nicht zur Verfügung gestellt, besteht die Gefahr, daß die Feststellstellung selbsttätig verlassen wird, so daß ein auf abschüssigem Gelände geparktes Fahrzeug sich selbsttätig in Bewegung setzen kann.

Der Erfindung liegt die Aufgabe zugrunde, einen Bremszylinder der eingangs beschriebenen Art bereitzustellen, der sowohl Betriebsbremsfunktion als auch Hilfsbrems- und/oder Feststellbremsfunktion erfüllt und trotzdem kürzer als übliche Federspeicherbremszylinder baut.

Erfindungsgemäß wird dies bei einem Bremszylinder der eingangs genannten Art dadurch erreicht, daß eine lösbare mechanische Verriegelungseinrichtung zwischen die Einheit aus Kolben und Kolbenstange des Betriebsbremsteils und die Einheit aus Speicherkolben und Speicherkolbenstange eingeschaltet ist, die während Betriebsbremsungen in Lösestellung bleibt und während Hilfs- und/oder Feststellbremsungen in Verriegelungsstellung überführt wird, und daß die Einheit aus Speicherkolben und Speicherkolbenstange baulich einen kleineren Hub als die Einheit aus Kolben und Kolbenstange aufweist und funktionsmäßig während Betriebsbremsungen der Hub des Kolbens allein und während Hilfs- und/oder Feststellbremsungen der Hub des Kolbens und der Hub des Speicherkolbens zur Verfügung steht.

Die Erfindung geht von dem Gedanken aus, einem Federspeicherbremszylinder eine mechanische Verriegelungseinrichtung zuzuordnen, obwohl ein Federspeicherbremszylinder, der in seinem Federspeicherteil einen mindestens gleich großen Hub wie in seinem Betriebsbremsteil aufweist, keine solche mechanische Verriegelungseinrichtung benötigt, da der Federspeicherteil über den gesamten Hub wirksam sein kann. Die lösbar ausgebildete mechanische Verriegelungseinrichtung ist nicht mehr zwischen die Kolbenstange und das Gehäuse des Bremszylinders eingeschaltet, sondern zwischen der Kolbenstange und der Speicherkolbenstange bzw. zwischen diesen beiden Einheiten. Damit ergibt sich die Möglichkeit, nicht nur zur Erfüllung der Betriebsbremsfunktion die Einheit aus Kolben und Kolbenstange im Bremssinne zu betätigen, sondern eine solche Betätigung auch zur Erfüllung einer Hilfs- und/oder Feststellbremsfunktion zu nutzen. Insoweit findet eine erheblich weitergehendere Integration zwischen dem Betriebsbremsteil einerseits und dem Hilfs- und/oder Feststellbremsteil andererseits statt. Wenn eine solche Verriegelungseinrichtung vorgesehen wird, obwohl sie an sich nicht erforderlich und auch nicht sinnvoll erscheint, ergibt sich überraschenderweise die Möglichkeit, den Hub der speicherfeder kleiner als den Hub der Einheit aus Kolben und Kolbenstange zu gestalten. Insbesondere kann dieser Hub die Überbrückung des Lüftspiels der Radbremse oder auch die Kontraktion einer Bremsscheibe bei Abkühlung berücksichtigen. Durch die Verriegelungseinrichtung ergibt sich die Möglichkeit, gestuft oder stufenlos die Speicherfeder auf die Kolbenstange des Betriebsbremsteils einwirken zu lassen, wobei, nachdem die Einheit aus Kolben und Kolbenstange ihren Hub ausgeführt hat, nur noch ein vergleichsweise sehr geringer Resthub besteht, der ggf. nachgedrückt werden muß. Mit anderen Worten ist der erforderliche Hub des Speicherkolbens sehr viel geringer als der Hub des Kolbens des Betriebsbremsteils. Hierdurch wiederum wird es möglich, das Gehäuse des Bremszylinders erheblich kürzer zu gestalten. Der Bremszylinder läßt sich insoweit am Fahrzeug auch einfacher unterbringen, indem er einen geringeren Raum erfordert. Weiterhin ist vorteilhaft, daß die Speicherfeder nur in einem kleinen Bereich benutzt wird. Sie expandiert beim Nachdrücken in den verschiedenen Verbindungsstellungen zu der Kolbenstange immer nur relativ gering, legt also einen kleinen Weg zurück. Damit wird der erhebliche Kraftabfall bei Expansion einer Speicherfeder vermieden und gleichsam in jeder verriegelten Stellung eine konstante Speicherkraft zur Einwirkung gebracht. Dies wiederum ermöglicht es, eine vergleichsweise schwächer dimensionierte Speicherfeder einzusetzen. Dann aber treten die weiteren Vorteile auf, daß geringere Lösedrücke zum Lösen der geringer ausgelegten Speicherfeder ausreichen und auch ein geringerer Luftverbrauch beim mehrmaligen Lösen des Federspeicherteils beispielsweise bei Rangierzwecken auftritt. Schließlich erniedrigt sich auch das Gewicht des Bremszylinders insgesamt.

Die mechanische Verriegelungseinrichtung kann vorteilhaft in Abhängigkeit von dem Hub der Einheit aus Speicherkolben und Speicherkolbenstange gesteuert werden, wobei der Belüftungsstellung der Lösekammer die Lösestellung der mechanischen Verriegelungseinrichtung und der Entlüftungsstellung der Lösekammer die Verriegelungsstellung zugeordnet ist. Die Verriegelungseinrichtung kann damit nur dann an der Kolbenstange des Betriebsbremsteils angreifen, wenn die Lösekammer zuvor entlüftet wurde. Damit besteht die Möglichkeit, den sehr kleinen Hub des Speicherkolbens und der Speicherkolbenstange an jeder Stelle des Hubs der Einheit aus Kolben und Kolbenstange des Betriebsbremsteils zu nutzen. Die ohnehin erforderliche Be- und Entlüftung der Lösekammer wird gleichzeitig dazu genutzt, um die Verriegelungseinrichtung zu steuern. Ein gesondertes Schaltventil o. dgl. ist damit nicht erforderlich.

So ist auch zweckmäßig die mechanische Verriegelungseinrichtung mechanisch lösbar ausgebildet. Dies stellt eine sehr einfache, zuverlässige und wirkungsvolle Möglichkeit dar, die beispielsweise auch dann benutzt werden kann, wenn eine Stromversorgung nicht vorliegt, wie dies bei abgestellten Anhängefahrzeugen in der Regel zutrifft.

Dem Speicherkolben kann eine Lösevorrichtung zugeordnet sein, die gleichzeitig als Lösevorrichtung für die mechanische Verriegelungseinrichtung ausgebildet ist. Die Lösevorrichtung erfüllt damit eine Doppelfunktion und dient auch dazu, bei Ausfall oder Nicht-Vorhandensein von Druckluft die festgestellte Parkstellung verlassen zu können, wie dies für Rangierzwecke sinnvoll ist.

Es kann ein Handbremsventil vorgesehen sein, das zur Erfüllung einer Feststellbremsfunktion zunächst den Kolben des Betriebsbremsteils belüftet und erst danach die Lösekammer des Speicherkolbens entlüftet. Es ist zwar ungewöhnlich, zur Erfüllung einer Feststellbremsfunktion eine Belüftung im Betriebsbremsteil herbeizuführen, jedoch führt diese Maßnahme dazu, daß der Hub des Feststellteils klein gehalten werden kann und trotzdem sicher die Funktion erbracht wird. Zur Erfüllung einer Hilfsbremsfunktion kann die Bremskammer belüftet werden. Dies kann über das Betriebsbremsventil oder das Handbremsventil erfolgen. Das Handbremsventil wird dazu vorteilhaft stufbar ausgebildet.

Die Erfindung setzt sich in einen Gegensatz zu den bisher üblichen Denkweisen auf dem hier vorliegenden Fachgebiet. Es wird ein Verfahren zur Belüftung eines Bremszylinders für eine druckluftbetätigte Fahrzeugbremse aufgezeigt, wobei zwar wie bisher ein Betriebsbremsventil einerseits und ein Handbremsventil andererseits zum Einsatz kommen. Dabei weist der Betriebsbremsteil des Bremszylinders eine durch einen Kolben mit Kolbenstange in einem Gehäuse abgeteilte Bremskammer und der Hilfs- und/oder Feststellbremsteil eine durch einen Speicherkolben mit Speicherkolbenstange im Gehäuse abgeteilte Lösekammer auf. Der Kolben und der Speicherkolben sind gleichsinnig im Gehäuse bewegbar. Zwischen dem Betriebsbremsteil und dem Hilfs- und/oder Feststellbremsteil ist eine lösbare mechanische Verriegelungseinrichtung vorgesehen. Zur Erfüllung einer Hilfsbremsfunktion wird jedoch über das Handbremsventil die Bremskammer des Betriebsbremsteils belüftet, um zunächst die Einheit aus Kolben und Kolbenstange im Sinne der Anlage der Radbremsen zu verschieben. Zur Erfüllung einer Feststellbremsfunktion mit dem Handbremsventil wird zunächst die Bremskammer des Betriebsbremsteils belüftet und anschließend die Lösekammer entlüftet, so daß dann die zwischen dem Betriebsbremsteil und dem Hilfs- und/oder Feststellbremsteil wirksame mechanische Verriegelungseinrichtung verriegelt wird. Durch die ungewöhnliche Maßnahme, die Bremskammer über das Handbremsventil zu belüften, wird es in Verbindung mit der Verriegelungseinrichtung möglich, den Hub des Feststellbremsteils erheblich zu verkleinern und trotzdem die Wirkung an jeder Stelle des Hubs des Betriebsbremsteils zu nutzen. Die Anwendung dieses neuen Verfahrens führt zu Bremszylindern, deren Länge im Vergleich zu entsprechenden Bremszylindern des Standes der Technik um ein Drittel verkürzt ist. Auch das Gewicht ist reduziert, und die Speicherfeder kann geringer dimensioniert werden.

Die Erfindung wird anhand bevorzugter Ausführungsbeispiele weiter erläutert und beschrieben. Es zeigen:
- Figur 1: eine schematisierte Schnittdarstellung des Bremszylinders in einer ersten Ausführungsform,
- Figur 2: eine schematisierte Schnittdarstellung eines Bremszylinders in einer zweiten Ausführungsform, und
- Figur 3: den inneren Teil eines Bremszylinders in einer dritten Ausführungsform.

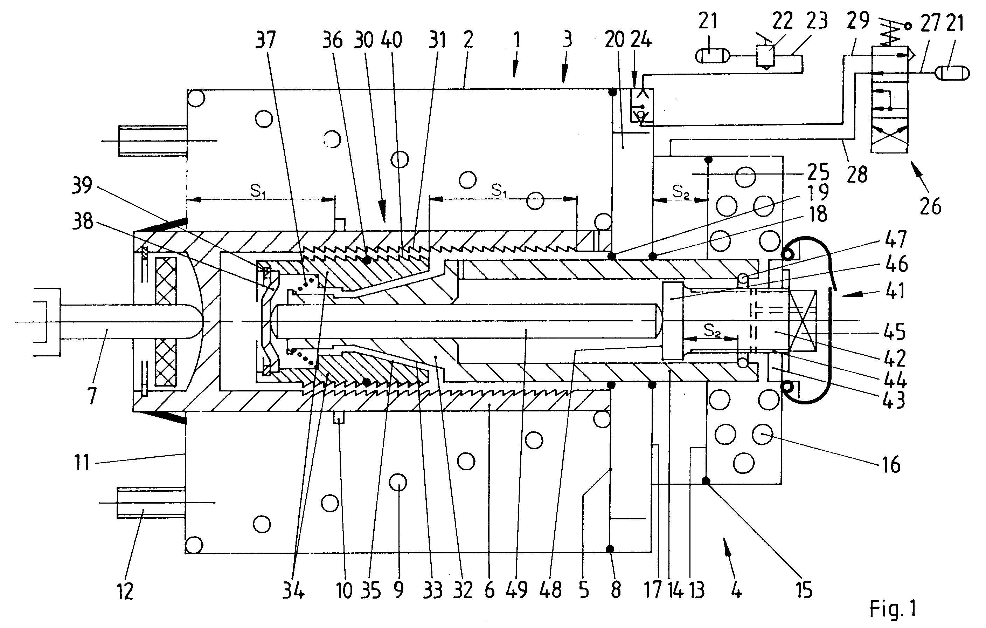

Der in Figur 1 dargestellte Bremszylinder 1 weist ein beispielsweise gestuft ausgebildetes Gehäuse 2 auf, in welchem ein Betriebsbremsteil 3 und ein Hilfs- und/oder Feststellbremsteil 4 gleichsinnig wirkend untergebracht sind. Wesentliche Bestandteile des Betriebsbremsteiles 3 sind ein Kolben 5 und eine mit diesem verbundene Kolbenstange 6, die hier nach Art eines Rohres ausgebildet ist und aus dem Gehäuse 2 des Bremszylinders 1 gegen Schmutzeindringung gedichtet nach außen geführt ist. Die Kolbenstange 6 kann auch mehrteilig ausgebildet sein und sich nach außen beispielsweise in einer Druckstange 7 fortsetzen, die auf die Radbremse einwirkt. Der Kolben 5 ist mit Hilfe einer Dichtung 8 im Gehäuse 2 dichtend gelagert und auf seiner Rückseite auf einer Rückführfeder 9 abgestützt. Auf der Kolbenstange 6 ist ein Anschlag 10 angeordnet, so daß damit in Verbindung mit einer Stirnwand 11 des Gehäuses 2 der Hub S1 des Kolbens 5 des Betriebsbremsteils 3 festgelegt ist. Die Stirnwand 11 kann Befestigungsschrauben 12 für die Anordnung des Bremszylinders 1 am Fahrzeug tragen.

Wesentliche Bestandteile des Hilfs- und/oder Feststellbremsteils 4 sind ein Speicherkolben 13 und eine damit verbundene Speicherkolbenstange 14, die ebenso eine Einheit bilden wie der Kolben 5 mit seiner Kolbenstange 6. Der Speicherkolben 13 besitzt eine Dichtung 15, mit der er dichtend und gleitend in einem entsprechenden Abschnitt des Gehäuses 2 geführt ist. Der Speicherkolben 13 ist auf seiner Rückseite auf einer Speicherfeder 16 abgestützt. Der Hilfs- und/oder Feststellbremsteil 4 mit seinem Speicherkolben 13 und der Speicherfeder 16 kann einen kleineren Durchmesser als der Kolben 5 des Betriebsbremsteils 3 aufweisen. Wesentlich ist aber, daß der Speicherkolben 13 einen Hub S2 aufweist, der wesentlich kleiner als der Hub S1 des Kolbens 5 des Betriebsbremsteiles 3 ausgebildet ist. Die Speicherfeder 16 kann im Vergleich zum Stand der Technik auch schwächer dimensioniert sein.

Zwischen dem Kolben 5 und dem Speicherkolben 13 ist mit dem Gehäuse 2 verbunden eine gehäusefeste Trennwand 17 vorgesehen. Die Speicherkolbenstange 13 ist durch diese Trennwand 17 hindurchgeführt und mit Hilfe einer Dichtung 18 abgedichtet. Die Speicherkolbenstange 14 durchsetzt auch den Kolben 5 des Betriebsbremsteils 3, wobei hier eine Dichtung 19 vorgesehen ist. Auf diese Weise wird im Gehäuse 2 des Bremszylinders 1 zwischen der Trennwand 17 und dem Kolben 5 eine Bremskammer 20 geschaffen, die zum Zwecke einer Betriebsbremsfunktion mit Druckluft beschickt wird, und zwar aus einem Vorratsbehälter 21 über ein Betriebsbremsventil 22 und eine Leitung 23, die über ein Zweiwegeventil 24 an die Bremskammer 20 angeschlossen ist.

Zwischen der Trennwand 17 und dem Speicherkolben 13 ist eine Lösekammer 25 vorgesehen, die zum Zwecke des Zusammendrückens der Speicherfeder 16 mit Druckluft beschickt wird. Zu diesem Zweck ist ein Handbremsventil 26 vorgesehen, welches die drei dargestellten Stellungen einnehmen kann und mit einer eigenen Entlüftung versehen ist. Das Handbremsventil 26 wird über eine Leitung 27 mit Druckluft aus dem Vorratsbehälter 21 versorgt. Von dem Handbremsventil 26 führt einerseits eine Leitung 28 zu einem nicht näher dargestellten Anschluß am Gehäuse 2 und damit zu der Lösekammer 25. Eine weitere Leitung 29 führt von dem Handbremsventil 26 zu dem anderen Anschluß des Zweiwegeventils 24 und damit alternativ zur Bremskammer 20.

Zwischen der Speicherkolbenstange 14 und der Kolbenstange 6 ist eine mechanische Verriegelungseinrichtung 30 angeordnet, die es gestattet, die Speicherkolbenstange 14 mit der Kolbenstange 6 zu verriegeln, also mechanisch zu verbinden (Verriegelungsstellung) oder die Verriegelungseinrichtung zu lösen, so daß sich die Kolbenstange 6 unabhängig von der Speicherkolbenstange 14 bewegen kann. Wesentlicher Bestandteil der Verriegelungseinrichtung 30 ist eine Verzahnung 31 am inneren Umfang der Kolbenstange 6, die über den inneren Umfang umlaufend vorgesehen ist und auch aus einem Gewindegang, aus umlaufenden Rillen o. dgl. bestehen kann. Die Speicherkolbenstange 14 besitzt auf ihrer in die Kolbenstange 6 hineinreichenden vorderen Seite einen sich konisch verjüngenden Fortsatz 32 mit einer Kegelfläche 33. In Zuordnung zu dem Fortsatz 32 bzw. der Kegelfläche 33 sind mehrere über den Umfang angeordnete Verriegelungssegmente 34 vorgesehen, beispielsweise drei oder vier Verriegelungssegmente 34 über den Umfang. Diese Verriegelungssegmente 34 besitzen jeweils eine konische Gegenfläche 35, die in ihrer Neigung auf die Neigung der Kegelfläche 33 abgestimmt ist. Die Verriegelungssegmente 34 werden in radialer Richtung über einen Federring 36 zusammengehalten. Die Verriegelungssegmente 34 sind weiterhin auf einer Feder 37 abgestützt, die am vorderen Ende des Fortsatzes 32 des Speicherkolbens 14 gelagert ist. Die Verriegelungssegmente 34 stehen weiterhin mit einer Scheibe 38 in Verbindung, gegenüber der sie sich radial bewegen können. Die Scheibe 38 kann an Anschlägen 39 abgestützt sein. Die Verriegelungssegmente 34 weisen auf ihrer Außenseite, beispielsweise über einen Teil ihrer Erstreckung, eine Gegenverzahnung 40 auf, die mit der Verzahnung 31 zusammenarbeitet. Die Gegenverzahnung 40 kann auch als Gewindeabschnitt, als umlaufende Rillen o. dgl. ausgebildet sein.

Der mechanischen Verriegelungseinrichtung 30 ist eine Löseeinrichtung 41 zugeordnet. Wesentlicher Bestandteil dieser Löseeinrichtung 41 ist ein Gewindebolzen 42, der in einer rückwärtigen Stirnwand 43 des Gehäuses 2 mit Hilfe eines Gewindes 44 eingeschraubt und eingestellt ist. Dieser Gewindebolzen 42 besitzt an seinem rückwärtigen Ende eine Ansatzfläche 45, beispielsweise einen Vierkant, zum Ansatz eines Verdrehwerkzeuges. Der Gewindebolzen 42 kann insoweit eingestellt werden. Er kann auch als mechanische Löseeinrichtung für den Hilfs- und/oder Feststellbremsteil 4 genutzt werden. Zu diesem Zweck besitzt der Gewindebolzen 42 einen Bund 46, der mit einem Sprengring 47 an der Speicherkolbenstange 14 zusammenarbeitet. Andererseits bildet der Bund 46 bzw. das in die Speicherkolbenstange 14 hineinreichende vordere Ende des Gewindebolzens 42 einen Anschlag 48 für eine Druckstange 49, die gleitend in dem Fortsatz 32 der Speicherkolbenstange 14 gelagert ist und sich mit ihrem anderen Ende in der betreffenden Stellung an der Scheibe 38 abstützt. Es ist erkennbar, daß damit beim Belüften der Lösekammer 25 die Möglichkeit besteht, die Verriegelungseinrichtung 30 zu lösen.

Im Vergleich zum Stand der Technik fällt auf, daß hier eine Art Kombizylinder mit einem Betriebsbremsteil 3 und einem Hilfs- und/oder Feststellbremsteil 4 geschaffen ist, bei dem jedoch in ungewohnter Weise der Hub S2 des Hilfs- und/oder Feststellbremsteils bzw. des Speicherkolbens 13 wesentlich kleiner als der Hub S1 des Kolbens 5 des Betriebsbremsteils ausgebildet ist. Ein weiteres wesentliches Unterschiedsmerkmal ist in der Anordnung der mechanischen Verriegelungseinrichtung 30 zwischen der Speicherkolbenstange 14 und der Kolbenstange 6 zu sehen.

Die Wirkungsweise dieses Bremszylinders ist folgende:
Durch das Handbremsventil 26 in Ausgangsstellung wird die Lösekammer 25 mit Druckluft beschickt und die Speicherfeder 16 durch den Speicherkolben 13 entsprechend zusammengedrückt, wie dies in Figur 1 dargestellt ist. Damit befindet sich die Verriegelungseinrichtung 30 in der dargestellten Lösestellung, und es ist während der Fahrt möglich, je nach Erfordernis die Betriebsbremse zu betätigen, indem über das Betriebsbremsventil 22 Druckluft in die Bremskammer 20 geschickt wird. Die Einheit aus Kolben 5 und Kolbenstange 6 bewegt sich dann je nach Bremsbetätigung und Einwirkung der Rückführfeder 9 wie ein ganz normaler Betriebsbremszylinder. Dies bedeutet, daß während normaler Betriebsbremsungen die Verriegelungseinrichtung 30 außer Funktion (Lösestellung) bleibt.

Zur Erreichung einer Feststellbremswirkung wird das Handbremsventil 26 zunächst so umgeschaltet, daß die Bremskammer 20 über das Zweiwegeventil 24 belüftet wird, während die Lösekammer 25 gleichzeitig belüftet bleibt. Es wird also hier auch der Hub des Kolbens 5 und der Kolbenstange 6 genutzt, d. h. die Radbremse angelegt. Sodann wird das Handbremsventil 26 in seine dritte Stellung umgeschaltet, in welcher die Bremskammer 20 belüftet bleibt, jedoch die Lösekammer 25 entlüftet wird. Damit hat die Speicherfeder 16 Gelegenheit, den Speicherkolben 13 und mit ihm die Speicherkolbenstange 14 um einen geringen Hub in Richtung auf die Radbremse zu verschieben. Der Fortsatz 32 der Speicherkolbenstange 14 fährt mit seiner Kegelfläche 33 in die Gegenflächen 35 der Verriegelungssegmente 34 ein, wobei die Druckstange 49 gleichzeitig von dem Anschlag 48 freikommt. Damit tritt eine Spreizwirkung auf die Verriegelungssegmente 34 ein, so daß die Gegenverzahnung 40 in die Verzahnung 31 an der Kolbenstange 6 eingreift. Die Verriegelungsstellung der Verriegelungseinrichtung 30 ist erreicht. Die Speicherfeder 16 hält damit die Radbremse angelegt. Auch wenn sich in diesem Kraftübertragungsweg infolge von Temperaturänderungen Wegänderungen ergeben, beispielsweise bei sich abkühlenden Bremsscheiben einer Scheibenbremse, werden diese Wegänderungen, die allenfalls Teile eines mm oder wenige mm ausmachen, von der Speicherfeder 16 überbrückt, so daß keine Gefahr besteht, daß sich ein derart abgestelltes und festgebremstes Fahrzeug von allein in Bewegung setzt. Es ist ersichtlich, daß die Verriegelungseinrichtung 30 je nach der Stufung der Verzahnung 31 und der Gegenverzahnung 40 in einer großen Anzahl unterschiedlicher Stellungen einwirken kann, so daß unabhängig von dem Zustand der Bremsbeläge und der Radbremsen im übrigen jeweils verläßlich die Wirkung aufgebracht werden kann, obwohl die Speicherfeder 16 und damit der Speicherkolben 13 nur einen relativ kleinen Hub S2 ausführen können.

Eine Hilfsbremsfunktion kann entweder über das Betriebsbremsventil 22 oder aber auch über das Handbremsventil 26 erreicht werden. Zu diesem Zweck muß das Handbremsventil 26 gestuft arbeitend ausgebildet werden. Dabei wird vom Handbremsventil 26 Druckluft über die Leitung 29 und das Zweiwegeventil 24 in die Bremskammer 20 geschickt, während die Lösekammer 25 belüftet bleibt. Die Verriegelungseinrichtung 30 verbleibt dabei immer in ihrer Lösestellung.

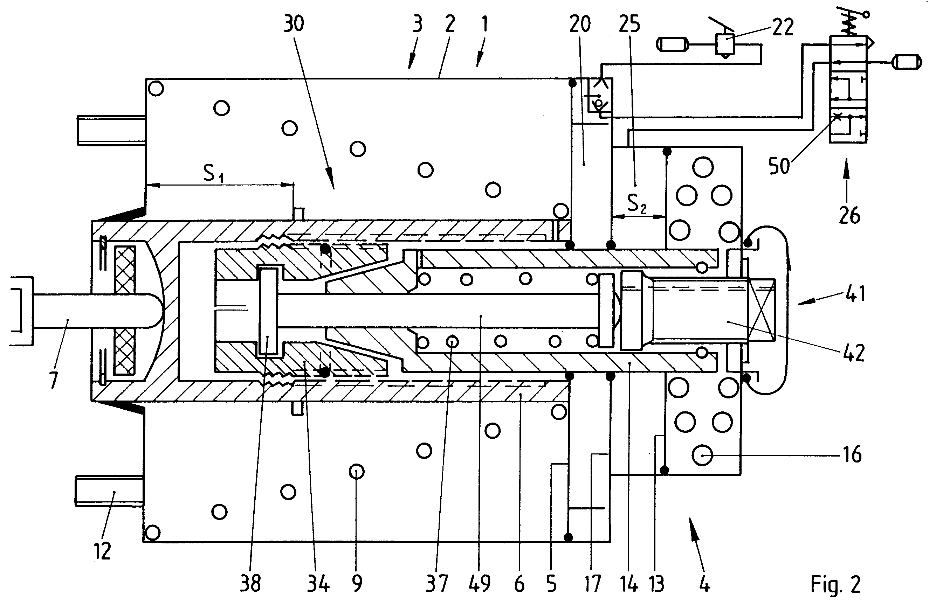

Figur 2 zeigt ein weiteres Ausführungsbeispiel, welches in weiten Bereichen ähnlich wie das Ausführungsbeispiel der Figur 1 aufgebaut ist, weshalb auf die vorangehende Beschreibung verwiesen werden kann. Lediglich das Handbremsventil 26 ist hier etwas anders aufgebaut. Es weist eine Stellung auf, in der die Lösekammer 25 vergleichsweise schnell und die Bremskammer 20 über eine Drossel 50 vergleichsweise verzögert entlüftbar sind, um die Feststellbremsfunktion zu sichern. Zusätzlich ist die Verzahnung 31 und die Gegenverzahnung 40 etwas anders ausgebildet. Grundsätzlich ergibt sich aber der gleiche Aufbau und die gleiche Funktionsweise.

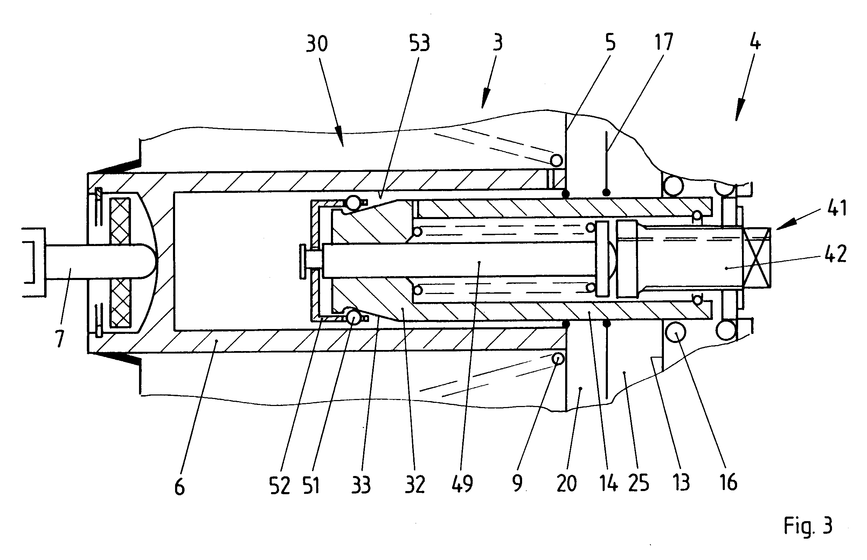

Auch die Ausführungsform der Figur 3 ist prinzipiell übereinstimmend aufgebaut. Lediglich die mechanische Verriegelungseinrichtung 30 besitzt hier Verriegelungskugeln 51, die in einem Käfig 52 gehaltert sind, mit dessen Hilfe sie über die Druckstange 49 auf der Kegelfläche 33 des Fortsatzes 32 der Speicherkolbenstange 14 bewegbar sind und so in eine Verriegelungsstellung bzw. Lösestellung überführt werden können. Die Verriegelungskugeln 51 arbeiten mit einer Bohrung 53 in der Kolbenstange 6 zusammen. Auch bei diesem Ausführungsbeispiel ist der Hub des Speicherkolbens 13 erheblich kleiner im Vergleich zum Hub des Kolbens 5 des Betriebsbremsteils 3. Die Verriegelungseinrichtung 30 arbeitet stufenlos, was zusätzlich dazu beiträgt, den Hub S2 des Speicherkolbens 3 besonders klein wählen zu können.

### BEZUGSZEICHENLISTE

- 1: - Bremszylinder
- 2: - Gehäuse
- 3: - Betriebsbremsteil
- 4: - Hilfs- u/o Feststellbremsteil
- 5: - Kolben
- 6: - Kolbenstange
- 7: - Druckstange
- 8: - Dichtung
- 9: - Rückführfeder
- 10: - Anschlag
- 11: - Stirnwand
- 12: - Befestigungsschraube
- 13: - Speicherkolben
- 14: - Speicherkolbenstange
- 15: - Dichtung
- 16: - Speicherfeder
- 17: - Trennwand
- 18: - Dichtung
- 19: - Dichtung
- 20: - Bremskammer
- 21: - Vorratsbehälter
- 22: - Betriebsbremsventil
- 23: - Leitung
- 24: - Zweiwegeventil
- 25: - Lösekammer
- 26: - Handbremsventil
- 27: - Leitung
- 28: - Leitung
- 29: - Leitung
- 30: - Verriegelungseinrichtung
- 31: - Verzahnung
- 32: - Fortsatz
- 33: - Kegelfläche
- 34: - Verreigelungssegment
- 35: - Gegenfläche
- 36: - Federring
- 37: - Feder
- 38: - Scheibe
- 39: - Anschlag
- 40: - Gegenverzahnung
- 41: - Lösevorrichtung
- 42: - Gewindebolzen
- 43: - Stirnwand
- 44: - Gewinde
- 45: - Ansatzfläche
- 46: - Bund
- 47: - Sprengring
- 48: - Anschlag
- 49: - Druckstange
- 50: - Drossel
- 51: - Verriegelungskugel
- 52: - Käfig
- 53: - Bohrung

## Patentansprüche

1. Bremszylinder (1) für eine druckluftbetätigte Fahrzeugbremse, mit einem Betriebsbremsteil (3), der eine durch einen Kolben (5) mit Kolbenstange (6) in einem Gehäuse (2) abgeteilte Bremskammer (20) aufweist, und mit einem Speicherkolben (13), der eine Speicherkolbenstange (14) aufweist und im Gehäuse (2) eine Lösekammer (25) abteilt, wobei der Kolben (5) mit Kolbenstange (6) und der Speicherkolben (13) mit Speicherkolbenstange (14) gleichsinnig im Gehäuse (2) bewegbar sind, **dadurch gekennzeichnet**, daß eine lösbare mechanische Verriegelungseinrichtung (30) zwischen die Einheit aus Kolben (5) und Kolbenstange (6) des Betriebsbremsteils (3) und die Einheit aus Speicherkolben (13) und Speicherkolbenstange (14) eingeschaltet ist, die während Betriebsbremsungen in Lösestellung bleibt und während Hilfs- und/oder Feststellbremsungen in Verriegelungsstellung überführt wird, und daß die Einheit aus Speicherkolben (13) und Speicherkolbenstange (14) baulich einen kleineren Hub als die Einheit aus Kolben (5) und Kolbenstange (6) aufweist und funktionsmäßig während Betriebsbremsungen der Hub des Kolbens (5) allein und während Hilfs- und/oder Feststellbremsungen der Hub des Kolbens (5) und der Hub des Speicherkolbens (13) zur Verfügung steht.

2. Bremszylinder nach Anspruch 1, **dadurch gekennzeichnet**, daß die mechanische Verriegelungseinrichtung (30) in Abhängigkeit von dem Hub (S2) der Einheit aus Speicherkolben (13) und Speicherkolbenstange (14) gesteuert ist, wobei der Belüftungsstellung der Lösekammer (25) die Lösestellung der mechanischen Verriegelungseinrichtung (30) und der Entlüftungsstellung der Lösekammer (25) die Verriegelungsstellung zugeordnet ist.

3. Bremszylinder nach Anspruch 1 oder 2, **dadurch gekennzeichnet**, daß die mechanische Verriegelungseinrichtung (30) mechanisch lösbar ausgebildet ist.

4. Bremszylinder nach Anspruch 3, **dadurch gekennzeichnet**, daß daß dem Speicherkolben (13) eine Lösevorrichtung zugeordnet ist, die gleichzeitig als Lösevorrichtung (41) für die mechanische Verriegelungseinrichtung (30) ausgebildet ist.

5. Bremszylinder nach einem der Ansprüche 1 bis 4, **dadurch gekennzeichnet**, daß ein Handbremsventil (26) vorgesehen ist, das zur Erfüllung einer Feststellbremsfunktion zunächst den Kolben (5) des Betriebsbremsteils (3) belüftet und erst danach die Lösekammer (25) des Speicherkolbens (13) entlüftet.

6. Verfahren zur Belüftung eines Bremszylinders (1) für eine druckluftbetätigte Fahrzeugbremse, mit einem Betriebsbremsventil (22) und einem Handbremsventil (26), wobei der Betriebsbremsteil (3) des Bremszylinders (1) eine durch einen Kolben (5) mit Kolbenstange (6) in einem Gehäuse (2) abgeteilte Bremskammer (20) und der Hilfs- und/oder Feststellbremsteil (4) eine durch einen Speicherkolben (13) mit Speicherkolbenstange (14) im Gehäuse (2) abgeteilte Lösekammer (25) aufweisen, der Kolben (5) und der Speicherkolben (13) gleichsinnig im Gehäuse (2) bewegbar sind und zwischen dem Betriebsbremsteil (3) und dem Hilfs- und/oder Feststellbremsteil (4) eine lösbare mechanische Verriegelungseinrichtung (30) vorgesehen ist, indem zur Erfüllung einer Hilfsbremsfunktion mit dem Handbremsventil (26) die Bremskammer (20) des Betriebsbremsteils (3) belüftet wird, und zur Erfüllung einer Feststellbremsfunktion mit dem Handbremsventil (26) zunächst die Bremskammer (20) des Betriebsbremsteils (3) belüftet und anschließend die Lösekammer (25) entlüftet wird, sodaß dann die zwischen dem Betriebsbremsteil (3) und dem Hilfs- und/oder Feststellbremsteil (4) wirksame mechanische Verriegelungseinrichtung (30) verriegelt wird.

## Claims

1. A brake cylinder (1) for a pneumatically actuated vehicle brake, having a service braking part (3) comprising a service brake chamber (20) located in a housing (2) and separated by a piston (5) with a piston rod (6), and having a spring-type brake piston (13) comprising a spring-type piston rod (14) and separating a release chamber (25) in the housing (2), the piston (5) with the piston rod (6) and the spring-type brake piston (13) with the spring-type piston rod (14) being arranged to act in the same direction with respect to the housing (2), **characterized in that**, a releasable mechanical locking device (30) is positioned between the unit composed of the piston (5) and the piston rod (6) of the service braking part (3) and the unit composed of the spring-type brake piston (13) and the spring-type piston rod (14), the mechanical locking device (30) remaining in released position during service braking actions but changing into the locking position during emergency braking and park braking actions, and the unit composed of the spring-type brake piston (13) and the spring-type piston rod (14) having a smaller designed stroke than the unit composed of the piston (5) and the piston rod (6) and offering during service braking actions the stroke of the piston (5) only and during emergency braking and park braking actions the stroke of the piston (5) and the stroke of the spring-type brake piston (13).

2. The brake cylinder of claim 1, **characterized in that**, the mechanical locking device (30) is controlled by the stroke (S2) of the unit composed of the spring-type brake piston (13) and the spring-type piston rod (14), wherein the ventilation of the release chamber (25) is assigned to the release position of the mechanical locking device (30) and the venting of the release chamber (25) is assigned to the locking position.

3. The brake cylinder of claim 1 and 2, **characterized in that**, the mechanical locking device (30) is designed to be released mechanically.

4. The brake cylinder of claim 3, **characterized in that**, a release device is assigned to the spring-type brake piston (13), serving also as a release device (41) for the mechanical locking device (30).

5. The brake cylinder of one of the claims 1 to 4, **characterized in that**, a hand brake valve (26) is provided, which during an emergency condition ventilates first the piston (5) of the service braking part (3) and thereafter vents the release chamber (25).

6. A method to ventilate a brake cylinder (1) of a pneumatically actuated vehicle brake, the brake cylinder having a service braking valve (22) and a hand braking valve (26), the service braking part (3) comprising a service brake chamber (20) located in a housing (2) and separated by a piston (5) with a piston rod (6), and the emergency braking and park braking part (4) comprising a spring-type brake piston (13) with a spring-type piston rod (14) and separating a release chamber (25) in the housing (2), the piston (5) with the piston rod (6) and the spring-type brake piston (13) with the spring-type piston rod (14) being arranged to act in the same direction with respect to the housing (2), and a releasable mechanical locking device (30) is positioned between the service braking part (3) and the emergency braking and park braking part (4), wherein during emergency braking the brake chamber (20) of the service braking part (3) is ventilated by the hand braking valve (26) and during park braking the brake chamber (20) of the service braking part (3) is ventilated by the hand braking valve (26) first and thereafter the release chamber (25) is vented, so that the mechanical locking device (30) acting between the service braking part (3) and the emergency braking and park braking part (4) is locked.

## Revendications

1. Cylindre de frein (1) pour un frein de véhicule à actionnement pneumatique, avec une partie frein de service (3) qui présente une chambre de frein (20) constituée par un compartiment délimité à l'intérieur d'un carter (2) par un piston (5) avec une tige de piston (6), et avec un piston d'accumulation (13) qui présente une tige de piston d'accumulation (14) et qui délimite dans le carter (2) une chambre de desserrage (25) où le piston (5) avec la tige de piston (6) et le piston d'accumulation (13) avec la tige de piston d'accumulation (14) peuvent être déplacés dans le carter (2) dans le même sens **caractérisé en ce qu'**un dispositif de verrouillage mécanique (30) déblocable est intercalé entre l'unité constituée du piston (5) et de la tige de piston (6) de la partie frein de service (3) et l'unité constituée du piston d'accumulation (13) et de la tige de piston d'accumulation (14), dispositif de verrouillage mécanique (30) qui, pendant les freinages de service, reste en position de desserrage et qui, pendant les freinages de secours et/ou d'immobilisation, est mis en position de verrouillage, et en ce que l'unité constituée du piston d'accumulation (13) et de la tige de piston d'accumulation (14) présente, par construction, une course plus faible que celle de l'unité constituée du piston (5) et de la tige de piston (6) et qui fonctionne de telle manière que lors des freinages de service, seule la course du piston (5) est disponible tandis que lors des freinages de secours et/ou d'immobilisation, ce sont et la course du piston (5) et la course du piston d'accumulation (13) qui sont disponibles.

2. Cylindre de frein suivant la revendication 1, **caractérisé en ce que** le dispositif du verrouillage mécanique (30) est commandé en fonction de la course (S2) de l'unité constituée du piston d'accumulation (13) et de la tige du piston d'accumulation (14) où, à la position d'accumulation en air de la chambre de desserrage (25) est associée la position de desserrage du dispositif de verrouillage mécanique (30) et, à la position de purgeage de la chambre de desserrage (25), est associée la position de verrouillage.

3. Cylindre de frein suivant la revendication 1 ou la revendication 2, **caractérisé en ce que** le dispositif de verrouillage mécanique (30) est conçu de manière à pouvoir être débloqué par voie mécanique.

4. Cylindre de frein suivant la revendication 3 **caractérisé en ce qu'**au piston d'accumulation (13) est associé un dispositif de desserrage qui fait simultanément fonction de dispositif de déblocage (41) pour le dispositif de verrouillage mécanique (30).

5. Cylindre de frein suivant l'une quelconque des revendications 1 à 4 **caractérisé en ce qu'** il est prévu une soupape de frein à main (26) qui, pour assurer une fonction de freinage d'immobilisation, alimente d'abord en air le piston (5) de la partie frein de service (3) avant de purger la chambre de desserrage (25) du piston d'accumulation (13).

6. Procédé pour l'alimentation en air comprimé d'un cylindre de frein (1) pour un frein de véhicule à actionnement pneumatique, avec une soupape de frein de service (22) et une soupape de frein à main (26) où la partie frein de service (3) du cylindre de frein (1) présente une chambre de frein (20) constituée par un compartiment délimité à l'intérieur d'un carter (2) par un piston (5) avec une tige de piston (6) et où la partie de frein de secours et/ou d'immobilisation (4) présente une chambre de desserrage (25) constituée par un compartiment délimité à l'intérieur du carter (2) par un piston d'accumulation (13) avec une tige de piston d'accumulation (14), où le piston (5) et le piston d'accumulation (13) peuvent être déplacés dans le même sens dans le carter (2), et où entre la partie frein de service (3) et la partie frein de secours et/ou d'immobilisation (4) il est prévu un dispositif de verrouillage mécanique (30) déblocable, procédé par lequel, pour la réalisation d'une fonction de freinage de secours, la chambre de frein (20) de la partie frein de service (3) est alimentée via la soupape de frein à main (26) et, pour la réalisation d'une fonction de freinage d'immobilisation, la chambre de frein (20) de la partie frein de service (3) est d'abord alimentée en air via la soupape de frein à main (26), la chambre de desserrage (25) étant ensuite purgée de sorte que le dispositif de verrouillage mécanique (30) agissant entre la partie frein de service (3) et la partie frein de secours et/ou d'immobilisation (4) est alors verrouillé.
